# EUROPÄISCHE PATENTSCHRIFT

(11) **EP 0 604 363 B1**
(45) Veröffentlichungstag und Bekanntmachung des Hinweises auf die Patenterteilung: **12.02.2003**
(21) Anmeldenummer: 93810870.1
(22) Anmeldetag: 13.12.1993
(51) Int. Cl.: C08G 59/68, C08G 59/60

(54) **Lagerstabile Lösungen von Beschleunigersystemen für Epoxydharze**
Stable solutions of accelerators for epoxy resins
Solutions d'accélération pour des résines epoxy stable au stockage

(30) Priorität: 22.12.1992 CH 393892
(43) Veröffentlichungstag der Anmeldung: 29.06.1994
(73) Patentinhaber: Vantico AG, 4057 Basel (CH)
(72) Erfinder: Wegmann, Alex, Dr., CH-4123 Allschwil (CH); Wolleb, Heinz, CH-1723 Marly (CH)
(74) Vertreter: Dannappel, Hans-Jochen, Dr.

(56) Entgegenhaltungen:
- EP-A- 0 471 988
- WO-A-90/12824
- US-A- 287 493
- US-A- 3 367 913
- US-A- 3 978 026
- US-A- 5 135 994

## Beschreibung

Die vorliegende Erfindung betrifft die Verwendung von lagerstabilen Lösungen als Beschleuniger bei der Härtung von Epoxidharz/Amin-Kombinationen.

Es ist bekannt, dass die Härtung von Epoxidharz/Amin-Systemen, wie z.B. bei Beschichtungen und Lacken, sowohl die Trocknung an der Oberfläche als auch die Durchhärtung der ganzen Lackschicht, wenn sie bei Umgebungstemperatur erfolgt, nur langsam über mehrere Stunden erfolgt. Solch lange Trocknungszeiten sind aber vorallem bei Zwischentrocknungen von Mehrschichtlackierungen unerwünscht. Man hat deshalb versucht, den Härtungsprozess durch Zusatz von etwa 5 % bestimmter Beschleuniger, wie vorallem 2,4,6-Tris-(dimethylaminomethyl)phenol zu beschleunigen. Die Trocknungszeit kann zwar dadurch um mehr als die Hälfte reduziert werden, sie genügt aber immer noch nicht den Erfordernissen einer grosstechnischen Anwendung.

Zur Lösung dieses Problems schlägt die GB-A-1'105'772 vor, anorganische Nitratsalze als Beschleuniger einzusetzen; diese weisen jedoch nur eine geringe Beschleunigung auf. Desweiteren schlägt die EP-A-83813 ein Beschleunigersystem vor, welches eine Kombination aus einem anorganischen Salz (z.B. einem Nitrat) und einer Verbindung mit mindestens drei Aminogruppen darstellt; aber auch dieses System hat noch eine zu geringe Beschleuniger-Wirkung. In jüngster Zeit schlägt nun die EP-A-0471988 ein Beschleunigersystem vor, welches eine Kombination des oben genannten 2,4,6-Tris-(dimethylaminomethyl)phenols und eines anorganischen Nitratsalzes mit einem aliphatischen Alkohol sowie gegebenenfalls Wasser enthält. Derartige Systeme bringen zwar eine weitere Reduktion der Härtungszeit, haben jedoch den grossen Nachteil, dass sie nicht lagerstabil sind und schon nach ein paar Wochen bei einer Temperatur von etwa 20°C beginnen, auszufallen, und ein Sediment bilden; für grosstechnische Zwecke sind deshalb auch diese Systeme nicht geeignet.

Im U.S.-Patent 5,135,994 werden Lösungen von Carboxylaten von Seltenen Erden in epoxidreaktiven Lösungsmitteln als Beschleuniger für die Härtung von Epoxidharzen offenbart.
Im U.S. Patent 2,837,493 wird die Heißhärtung von Bisphenol-Epoxidharzen mit Lösungen von Metallphenolaten in organischen Lösungsmitteln beschrieben.
Chrom(III)carboxylate als Katalysatoren für die Anhydridhärtung von Epoxidharzen sind aus dem U.S. Patent 3,978,026 bekannt.
Metallsalz-Amin-Komplexe werden in der WO 90/12824 als Co-Katalysatoren für die Härtung von ungesättigten Polyestern vorgeschlagen.

Die oben aufgeführten Beschleunigersysteme sind sind entweder nicht reaktiv genug, oder sie sind nicht lagerstabil.

Eine Aufgabe der vorliegenden Erfindung war es daher, ein Beschleunigersystem zu entwickeln, welches einerseits sowohl bezüglich Temperatur als auch bezüglich Zeit lagerstabil ist, und das andererseits grosstechnisch eingesetzt werden kann, ohne nachteiligen Einfluss auf die Trocknungsgeschwindigkeit.

Gelöst wird diese Aufgabe durch die Verwendung einer Lösung, die ein binäres System aus
a) 10 bis 90 Gew.% eines Salzes der Formel II

   [Me₁]^{x⊕}ₘ[A]^{**y⊖**}_{**n**} (II),

   welches kein Kristallwasser enthält,
   mit einem organischen Komplexbildner enthaltend mindestens zwei Heteroatome mit freien Elektronenpaaren, welche so angeordnet sind, dass sie mit dem Kation Me₁ einen 5-, 6- oder 7-gliedrigen Chelatring bilden können,
   worin Me₁ Li, Na, K, Mg, Ca, Ba, Fe, Co, Ni, Cu, Zn, Sn, Al, La oder Ce oder eine Gruppe der Formel N(R₁)₄, S(R₁)₃ oder P(R₁)₄ darstellt, worin R₁ unabhängig voneinander Wasserstoff, einen unsubstituierten oder substituierten C₁-C₆-Alkylrest oder Arylrest bedeutet, A ein beliebiges Anion ist, x und y die jeweilige Anzahl der Ladungen darstellen, sowie m und n jeweils eine Zahl von 1 bis 4 bedeuten, und
b) 90 bis 10 Gew.% eines organischen Lösungsmittels enthaltend mindestens eine -OH, -OR₁, -COOH, -COOR₁, -COR₁ oder -CON(R₁)₂ Gruppe, worin R₁ Wasserstoff, einen unsubstituierten oder substituierten C₁-C₆-Alkylrest oder Arylrest bedeutet, enthält, als Beschleunigersysteme für die Härtung von
   Epoxidharz/Amin-Kombinationen.

Bevorzugte erfindungsgemässe Beschleunigersysteme enthalten 25 bis 75 Gew.% des Salzes der Formel I oder des Salzes der Formel II mit dem Komplexbildner, und 25 bis 75 Gew.% eines Lösungsmittels b).

Bevorzugt bedeutet Me₁ Li, Ca, Fe oder La.

A stellt ein beliebiges Anion dar, z.B. Cl, Br, J, NO₃, NO₂, ClO₃, ClO₄, SbF₆, AsF₆, PF₆, BF₄, CN, SCN, R₃-COO, R₃-SO₃, R₃-SO₂, PO₄, HPO₄ und H₂PO₄, worin R₃ unsubstituiertes oder substituiertes C₁-C₆-Alkyl oder Aryl darstellt; als Anionen sind Br, J, NO₃, Triflat, Capronat, Perchlorat und Propionat bevorzugt.

R₁ und R₃ in der Bedeutung eines unsubstituierten oder substituierten C₁-C₆-Alkylrestes stellen sowohl einen geradkettigen als auch verzweigten Alkylrest dar, wie z.B. einen Methyl-, Ethyl-, n-Propyl-, iso-Propyl-, n-Butyl-, sec-Butyl-, tert-Butyl-, n-Pentyl-, iso-Pentyl-, n-Hexyl- und iso-Hexylrest;

R₃ in der Bedeutung eines Arylrestes bedeutet z.B. Phenyl oder α-Naphthyl.

R₂ und R₄ (gemäss nachstehender Formel IV) in der Bedeutung eines C₁-C₂₀-Alkylrestes stellen einen vorzugsweise geraden oder auch verzweigten Alkylrest dar. Von besonderem Interesse sind n-Butyl und n-Octyl.

R₄ (gemäss nachstehender Formel IV) in der Bedeutung eines Trialkylsilylrestes stellt vorallem den Trimethylsilylrest dar.

R₅ (gemäss nachstehender Formel IV) in der Bedeutung eines C₁-C₆-Alkylrestes bedeutet einen geraden oder verzweigten Alkylrest, wie oben unter R₃ angegeben. Vorzugsweise bedeutet R₅ die Methylgruppe.

Sind die Alkyl- bzw. Arylreste R₁, R₂ und R₃ substituiert, so können diese ein- oder mehrmals substituiert sein, vorallem durch Halogen, wie Fluor, Chlor und Brom, durch NO₂ oder Alkoxy, wie Methoxy und Ethoxy.

Als organische Lösungsmittel kommen solche in Frage, die mindestens eine -OH, -OR₁, -COOH, -COOR₁, -COR₁ oder -CON(R₁)₂ Gruppe enthalten. Beispiele hierfür sind: aliphatische Monoalkohole, wie Methanol, Ethanol, 1-Butanol und Methoxypropylalkohol, ferner aliphatische Dialkohole, wie Ethylenglykol; Ketone, wie Methylethylketon und Methylisobutylketon, sowie Ether, wie Butylmethylether. Es können aber auch Mischungen von organischen Lösungsmitteln verwendet werden.

Die organischen Komplexbildner enthalten mindestens zwei Heteroatome, die freie Elektronenpaare aufweisen, wie N, O und S, welche so angeordnet sind, dass sie mit dem Kation Me₁ einen 5-, 6- oder 7-gliedrigen Chelatring bilden können.

Bevorzugte organische Komplexbildner sind:
2,4,6-Tris-(dimethylaminomethyl)-phenylbutylether, 2,4,6-Tris-(dimethylaminomethyl)-phenyloctylether, 3-Dimethylaminophenol, 3-Dimethylamino-phenylbutylether, 3-Dimethylamino-phenyloctylether, Äpfelsäuredimethylester, N,N-Dimethylphenylalanin-methylester, Piperidinoethylamin, N,N-Dimethylaminoethyl-piperidin, 2,4,6-Tris-(dimethylaminomethyl)-phenol, Thioharnstoff, Salicylsäure oder 2,4,6-Tris-(dimethylaminomethyl)-phenyl-trimethylsilylether.

Des weiteren sind Beschleunigersysteme bevorzugt, welche 25 bis 75 Gew.% eines Salzes der Formel II enthalten, worin A Cl, Br, J, NO₃, NO₂, ClO₃, ClO₄, SbF₆, AsF₆, PF₆, BF₄, CN, SCN, R₃-COO, R₃-SO₃, R₃-SO₂, PO₄, HPO₄ oder H₂PO₄ bedeutet, worin R₃ unsubstituiertes oder substituiertes C₁-C₆-Alkyl oder Aryl darstellt, und der organische Komplexbildner entweder der Formel IV 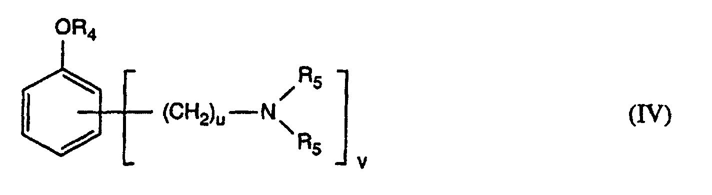 entspricht, worin R₄ Wasserstoff, C₁-C₂₀Alkyl oder Trialkyl(C₁-C₄)-Silyl, u die Zahl 0, 1 oder 2, R₅ C₁-C₆-Alkyl und v die Zahl 1, 2 oder 3 sind,
oder ein Äpfelsäuredi(C₁-C₄)alkylester, ein N,N-Di(C₁-C₄)Alkylphenylalanin(C₁-C₄)-alkylester, Thioharnstoff oder unsubstituierte oder substituierte Salicylsäure oder ein Piperidinderivat ist,
und vor allem solche, worin Me₁ Li, Ca, Fe oder La und A NO₃, Br, J, Triflat (Trifluormethylsulfonat), Capronat, Perchlorat oder Propionat ist, und der organische Komplexbildner 2,4,6-Tris-(dimethylaminomethyl)-phenylbutylether, 2,4,6- Tris-(dimethylaminomethyl)-phenyloctylether, 3-Dimethylaminophenol, 3-Dimethylamino-phenylbutylether, 3-Dimethylamino-phenyloctylether, Äpfelsäuredimethylester, N,N-Dimethylphenylalanin-methylester, Piperidinoethylamin, N,N-Dimethylaminoethyl-piperidin, 2,4,6-Tris-(dimethylaminomethyl)-phenol, Thioharnstoff, Salicylsäure oder 2,4,6-Tris-(dimethylaminomethyl)-phenyl-trimethylsilylether ist, und das Lösungsmittel Methanol, Ethanol, Propanole, Butanole, Methylethylketon, Methylisobutylketon, Ethylenglykol oder Methoxypropylalkohol ist.

Im erfindungsgemässen Beschleunigersystem kann das Salz der Formel II zusammen mit dem organischen Komplexbildner als stöchiometrischer Komplex, z.B. als 1:2-Komplex vorliegen. Solche 1:2-Metall-Komplexe haben z.B. folgende Struktur, beim Salz Ca(NO₃)₂ mit dem Komplexbildner der Formel IV veranschaulicht: 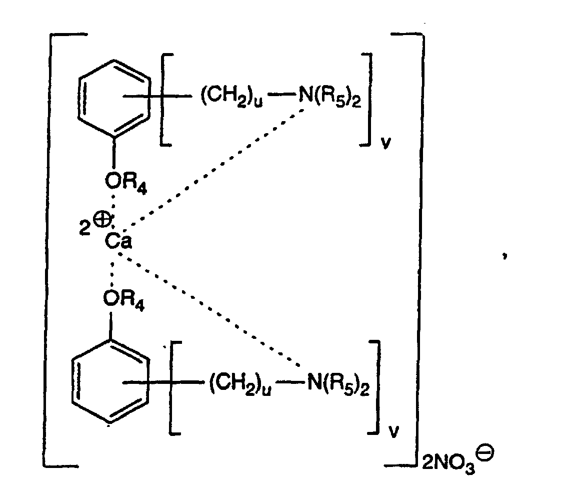 worin die Symbole die angegebene Bedeutung haben.

Schliesslich sind generell solche Beschleunigersysteme bevorzugt, die absolut wasserfrei sind, d.h. dass auch die eingesetzten Salze der Formel II kein Kristallwasser enthalten, und auch Lösungsmittel enthalten, die wasserfrei sind.

Die erfindungsgemässen Beschleunigersysteme sind klare Lösungen, welche sehr stabil sind. Sie sind sowohl über einen längeren Zeitraum, mindestens 9 Monate lagerstabil, wobei sich kein Niederschlag und auch kein Sediment bilden und wobei die klare Lösung als solche erhalten bleibt, als auch in einem Temperaturbereich von etwa -10°C bis +50°C lagerstabil. Sie gewährleisten schnelle Härtungszeiten und stellen somit effiziente Beschleuniger dar. Die beschleunigende Wirkung wird durch eine mehrmonatige Lagerung nicht beeinträchtigt. Dadurch sind sie für eine grosstechnische Anwendung bestens geeignet.

Überraschend dabei ist, dass gegenüber der Lehre der EP-A-0471988 auch andere Salze als Nitrate gemäss der Formel II eingesetzt werden können und z.B. auch veretherte Derivate von Aminophenol der Formel II verwendbar sind oder anstelle der Aminophenole der Formel IV ganz andere Moleküle, wie z.B. Alkohole oder Carbonsäuren, verwendet werden können, ohne einen nachteiligen Effekt hervorzurufen. Besonders interessant in diesem Zusammenhang ist, dass sterisch sperrige Substituenten, wie z.B. die Octylgruppe als Symbol R₄ der Formel IV, verwendet werden können. Auch im Zusammenhang mit den Salzen der Formel I ist es überraschend, dass strukturell grosse, stark lipophile Anionen R eingesetzt werden können. Eine Verringerung der beschleunigenden Wirkung tritt nicht ein.

Die Herstellung der erfindungsgemässen Beschleunigersysteme erfolgt z.B. durch Mischen der einzelnen Komponenten, d.h. durch Mischen des Salzes der Formel II mit dem Komplexbildner und dem organischen Lösungsmittel zweckmässig bei einer Temperatur von 10°C bis 40°C, wobei die Reihenfolge der Zugabe der Komponenten ohne Belang ist.

Die Salze der Formel II, die organischen Lösungsmittel und zum Teil die Komplexbildner sind bekannt und können nach bekannten Methoden erhalten werden.

Verwendung finden die erfindungsgemässen Beschleunigersysteme sowie die 1:2-Metallkomplex-Beschleuniger z.B. zum Härten von Epoxidharz/Amin-Kombinationen, wie von Lack- und Beschichtungssystemen, wobei die Trocknungszeiten im Bereich von etwa 15 bis 40 Minuten liegen. Als Amine kommen z.B. aliphatische, cycloaliphatische und aromatische Amine, besonders Polyamine und vorallem Polyamidoamine in Betracht. Kombinationen dieser Amine mit den erfindungsgemässen Beschleunigersystemen und gegebenenfalls organischen Lösungsmitteln sind ebenfalls während mindestens 9 Monaten in einem Temperaturbereich von -10°C bis +50°C lagerstabil. Ausserdem lösen sich die Beschleunigersysteme in vielen Fällen vorteilhaft auch in den Aminhärtern. Die gehärte - ten Epoxy/Aminsysteme finden Anwendung vorallem im Oberflächenschutz (z.B. Lacke, Beschichtungen, Bodenbeläge), im Baubereich (z.B. als Injektionsharze oder Spachtelmassen) oder als Giess- und Enkapsulierungsharze. In all diesen Anwendungen zeigen die erfindungsgemäss beschleunigten Harze eine sehr gute Haftfestigkeit.

In den nachfolgenden Beispielen ist die Erfindung näher erläutert, ohne sie darauf zu beschränken. Die Abkürzung "RT" bedeutet Raumtemperatur von etwa 20-25°C. Der Festkörpergehalt soll so verstanden werden, dass beim Eindampfen der Lösung der jeweils angegebene Festkörpergehalt erhalten wird.

Beispiel 1: In 25 ml 1-Butanol werden unter Rühren und leichtem Erwärmen 2,17 g (0.025 Mol) Lithiumbromid gelöst und anschliessend 5,6 g (0,047 Mol) Piperidino-ethylamin zugegeben. Es entsteht eine klare, leicht gelbe Lösung des Beschleunigers (Lithium-Bromid-Komplex des obigen Ethylamins; Festkörpergehalt 27,9 %).

Beispiel 2: In 25 ml 1-Butanol werden 3,3 g (0,025 Mol) Lithiumjodid gelöst und anschliessend 12,5 g (0,047 Mol) 2,4,6-Tris-(dimethylaminomethyl)phenol zugegeben. Es entsteht eine klare, leicht gelbe Lösung des Beschleunigers (Lithium-Jodid-Komplex des obigen Phenols; Festkörpergehalt 43,8 %).

Beispiel 3: In 27,6 g Methanol werden 3 g (0,0125 Mol) Eisen(III)nitrat gelöst und anschliessend 6,25 g (0,0235 Mol) 2,4,6-Tris-(dimethylaminomethyl)phenol zugegeben. Es entsteht eine klare, dunkel rot-braune Lösung des Beschleunigers (Eisen-Nitrat-Komplex des obigen Phenols; Festkörpergehalt 25 %).

Beispiel 4: In 21,3 g 1-Butanol werden 0,9 g (0,125 Mol) Lithiumnitrat gelöst und anschliessend 6,25 g (0,0235 Mol) 2,4,6-Tris-(dimethylaminomethyl)phenol zugegeben. Es entsteht eine klare, leicht gelbe Lösung des Beschleunigers (Lithium-Nitrat-Komplex des obigen Phenols; Festkörpergehalt 25 %).

Beispiel 5: In einem 100 ml Rundkolben mit Magnetrührer werden 40 ml H₂O vorgelegt und 12,78 g (85 mMol) Trifluormethansulfonsäure eingewogen. Unter Rühren werden 14,15 g (15 mMol) Lanthancarbonat zugegeben. Die neutrale Suspension wird filtriert, das Filtrat wird am Rotavapor eingedampft und anschliessend am Hochvakuum getrocknet. Man erhält 18,0 g Lanthantriflat als weisses Pulver.

In 10,5 g Methanol werden 2 g (2,89 mMol) Lanthantriflat gelöst und anschliessend 1,5 g (5,65 mMol) 2,4,6-Tris-(dimethylaminomethyl)-phenol zugegeben. Es entsteht eine klare, leicht gelbe Lösung des Beschleunigers (Lanthan-Triflat-Komplex des obigen Phenols; Festkörpergehalt 25 %).

Beispiel 6: In einem 250 ml Rundkolben mit Magnetrührer und Tropftrichter werden 14,82 g (0,2 Mol) Calciumhydroxid eingewogen, 100 ml H₂O zugegeben und anschliessend unter Rühren 46,46 g (0,4 Mol) Capronsäure zugetropft. Es bildet sich ein weisser Niederschlag, welcher filtriert und mit H₂O gewaschen wird. Nach dem Trocknen am Hochvakuum erhält man 51,3 g Calciumcapronat als weissen Feststoff.

In 28,8 g Methanol werden 3,4 g (0,0125 Mol) Calciumcapronat gelöst und anschliessend 6,23 g (0,0235 Mol) 2,4,6-Tris-(dimethylaminomethyl)phenol zugegeben. Es entsteht eine klare, leicht gelbe Lösung des Beschleunigers (Calcium-Capronat-Komplex des obigen Phenols; Festkörpergehalt 25 %).

Beispiel 7: In 27,6 g 1-Butanol werden 2,98 g (0,0125 Mol) Calciumperchlorat gelöst und anschliessend 6,25 g (0,0235 Mol) 2,4,6-Tris-(dimethylaminomethyl)phenol zugegeben. Es entsteht eine klare, leicht gelbe Lösung des Beschleunigers (Calcium-Perchlorat-Komplex des obigen Phenols; Festkörpergehalt 25 %).

Beispiel 8: In 32,4 g 1-Butanol werden 4,57 g (0,0125 Mol) Calciumjodid gelöst und anschliessend 6,25 g (0,0235 Mol) 2,4,6-Tris-(dimethylaminomethyl)phenol zugegeben. Es entsteht eine klare, leicht gelbe Lösung des Beschleunigers (Calcium-Jodid-Komplex des obigen Phenols; Festkörpergehalt 25 %).

Beispiel 9: 1,33 g (0,0125 Mol) Lithiumperchlorat werden in 22,5 g 1-Butanol gelöst und 6,2 g (0,0235 Mol) 2,4,6-Tris-(dimethylaminomethyl)-phenol zugegeben. Es entsteht eine klare, leicht gelbe Lösung des Beschleunigers (Lithium-Perchlorat-Komplex des obigen Phenols; Festkörpergehalt 25 %).

Beispiel 10: Analog zu Beispiel 8 werden in 29,6 g 1-Butanol 3,7 g (0,0125 Mol) Calciumjodid (24 h bei 200°C/10⁻² T (1,33 Pa) getrocknet) gelöst und anschliessend 6,25 g (0,0235 Mol) 2,4,6-Tris-(dimethylaminomethyl)phenol zugegeben. Es entsteht eine klare, leicht gelbe Lösung des Beschleunigers (Calcium-Jodid-Komplex des obigen Phenols; Festkörpergehalt 25 %).

Beispiel 11: In 20 g 1-Butanol werden unter Rühren und leichtem Erwärmen 2,15 g (0,0125 Mol) Calciumnitrat (24 h bei 200°C/10⁻² T (1,33 Pa) getrocknet) gelöst und anschliessend 4,5 g (0,0235 Mol) 3-Dimethylamino-phenylbutylether zugegeben. Es entsteht eine klare, farblose Lösung des Beschleunigers (Calcium-Nitrat-Komplex des obigen Butylethers; Festkörpergehalt 25 %).

Beispiel 12: In 22,5 g 1-Butanol werden unter Rühren 1,33 g (0,0125 Mol) Lithiumperchlorat und 6,2 g (0,0235 Mol) 2,4,6-Tris-(dimethylaminomethyl)-phenol gelöst. Es entsteht eine klare leicht gelbe Lösung des Beschleunigers (Lithium-Perchlorat-Komplex des obigen Phenols; Festkörpergehalt 25 %).

Beispiel 13: In 16,2 g Methanol werden unter Rühren 2,16 g (0,0125 Mol Calciumnitrat (24 h bei 200°C/10⁻² T (1,33 Pa) getrocknet) und 3,2 g (0,0235 Mol) Salicylsäure gelöst. Es entsteht eine klare, farblose Lösung des Beschleunigers (Lithium-Nitrat-Komplex der obigen Salicylsäure; Festkörpergehalt 25 %).

Beispiel 14: Eine 25 %-ige Lösung des Beschleunigers von 2,4,6-Tris-(dimethylaminomethyl)-phenyl-octylether und getrocknetem Calciumnitrat (24 h bei 200°C/10⁻² T (1,33 Pa)) wird in 1-Butanol hergestellt (Calcium-Nitrat-Komplex des obigen Octylethers).

Beispiel 15: Analog zu Beispiel 6 wird eine 25 %-ige Lösung des Beschleunigers von Calciumpropionat (hergestellt analog zu Calciumcapronat) und 2,4,6-Tris-(dimethylaminomethyl)-phenol in Methanol hergestellt (Calcium-Propionat-Komplex des obigen Phenols).

Beispiel 16: Eine 25 %-ige Lösung des Beschleunigers von Piperidino-ethylamin und Lithiumjodid wird in 1-Butanol hergestellt (Lithium-Jodid-Komplex des obigen Ethylamins).

Beispiel 17: 17,6 g (0,1073 Mol) getrocknetes Calciumnitrat werden unter Rühren und Erwärmen auf 40°C in 25,4 g absolutem Ethanol gelöst. Anschliessend gibt man 57,0 g (0,2148 Mol) 2,4,6-Tris-(dimethylaminomethyl)-phenol zu. Man erhält eine klare, dunkelgelbe Lösung des Beschleunigers (Calcium-Nitrat-Komplex des obigen Phenols; Festkörpergehalt 75 %).

Beispiel 18: 11,3 g eines Beschleunigers gemäss Beispiel 17 werden in 63,4 g eines Polyamidoamins (Amingehalt 4,2-4,6 Eq/kg) und 25,4 g Methylisobutylketon unter Rühren und Erwärmen auf 40°C gelöst. Man erhält eine klare, gelbe Lösung des Beschleunigers im Aminhärter.

Beispiel 19: Herstellung eines Beschleunigersystems gelöst im Härter gemäss Beispiel 18 und Lagerung dieses Systems während 3 Monaten. Man erhält eine braune, klare Lösung des Beschleunigers im Härter.

Beispiel 20: 75 g eines Epoxidharzes basierend auf Bisphenol-A (Epoxidgehalt 2,00 - 2,23 Eq/kg) gelöst in 25 g Xylol werden mit 37,5 g eines Polyamidoamins (Amingehalt 4,2 - 4,6 Eq/kg) und 5-10 Gew.% (bezogen auf die Menge an Epoxidharzlösung) eines Beschleunigers (hergestellt gemäss den Beispielen 2,8 bis 12, 14 und 17-19) gut miteinander vermischt. Der Beschleuniger kann jedoch auch bereits mit dem Polyamidoamin und etwas Lösungsmittel vorgemischt zum Einsatz kommen. Anschliessend wird die so hergestellte Lackformulierung mit einer Mischung von Xylol und n-Butanol (im Verhältnis 4:1) verdünnt, bis der Festkörpergehalt noch 52 % beträgt. Die Lackformulierung wird dann durch einen Gazefilter filtriert und anschliessend mit einem Rakelaufziehgerät oder einem Filmziehrahmen auf geeignete Substrate (Glasplatten bzw. dekapierte und entfettete Eisenplatten) aufgezogen, so dass ein Lackfilm mit einer Trockenfilmdicke von ca. 20 µm entsteht.

In der nachfolgenden Tabelle I werden die lacktechnischen Eigenschaften der applizierten Lackfilme während und nach der Aushärtung beschrieben. Die Härtung und Durchführung der Lackprüfungen erfolgt bei 20°C und 65 %-iger relativer Feuchtigkeit. Ausserdem wird die Lagerstabilität der Beschleuniger nach zwei Monaten im gemäss dem dort angegebenen Beispiel verwendeten Lösungsmittel charakterisiert.

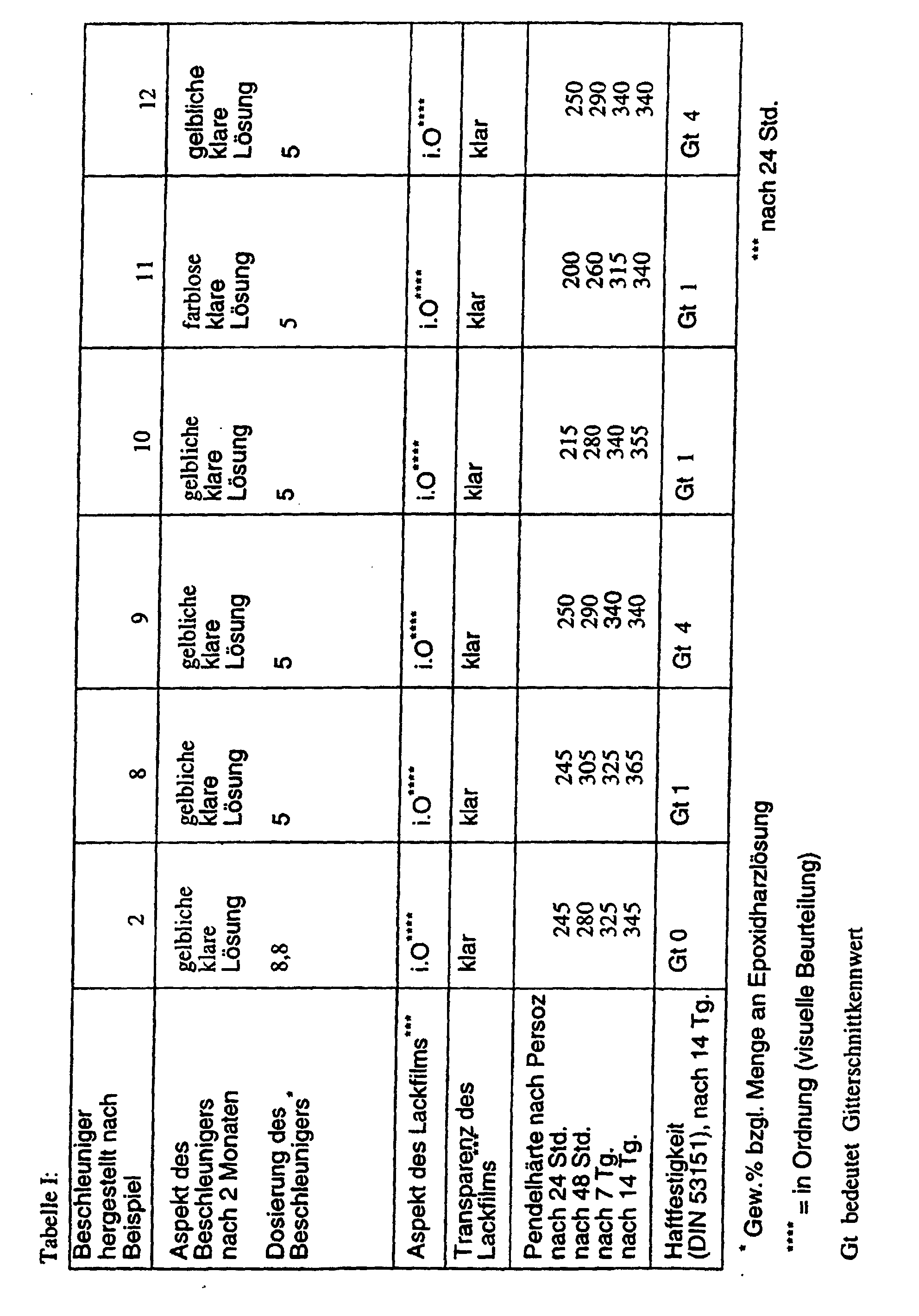

**Tabelle I:**

| (Fortsetzung) | | | | |
|---|---|---|---|---|
| Beschleuniger hergestellt nach Beispiel | 14 | 17 | 18 | 19 |
| Aspekt des | gelbliche | gelbliche | gelbe | braune |
| Beschleunigers | klare | klare | klare | klare |
| nach 2 Monaten | Lösung | Lösung | Lösung | Lösung |
| Dosierung des Beschleunigers* | 5 | 5 | 5 | 5 |
| | | | | |
| Aspekt des Lackfilms*** | i.O**** | i.O**** | i.O.**** | i.O.**** |
| Transparenz des Lackfilms *** | klar | klar | klar | klar |
| Pendelhärte nach Persoz | | | | |
| nach 24 Std. | 230 | 240 | 245 | 205 |
| nach 48 Std. | 280 | 270 | 280 | 270 |
| nach 7 Tg. | 315 | 335 | 335 | 320 |
| nach 14 Tg. | 345 | 355 | 350 | 340 |
| Haftfestigkeit | Gt 0 | Gt 0 | Gt 1 | Gt 1 |
| (DIN 53151), nach 14 Tg. | | | | |

| | | | | |
|---|---|---|---|---|
| * Gew.% bzgl. Menge an Epoxidharzlösung | | | | |
| *** nach 24 Std. | | | | |
| **** = in Ordnung (visuelle Beurteilung) | | | | |

## Patentansprüche

1. Verwendung von Lösungen enthaltend ein binäres System aus
a) 10 bis 90 Gew.% eines Salzes der Formel II
**[Me**_{**1**}**]**^{**x⊕**}_{**m**}**[A]**^{**y⊖**}_{**n**} **(II),**
welches kein Kristallwasser enthält,
mit einem organischen Komplexbildner enthaltend mindestens zwei Heteroatome mit freien Elektronenpaaren, welche so angeordnet sind, dass sie mit dem Kation Me₁ einen 5-, 6- oder 7-gliedrigen Chelatring biiden können,
worin Me₁ Li, Na, K, Mg, Ca, Ba, Fe, Co, Ni, Cu, Zn, Sn, Al, La oder Ce oder eine Gruppe der Formel N(R₁)₄, S(R₁)₃ oder P(R₁)₄ darstellt, worin R₁ unabhängig voneinander Wasserstoff, einen unsubstituierten oder substituierten C₁-C₆-Alkylrest oder Arylrest bedeutet, A ein beliebiges Anion ist, x und y die jeweilige Anzahl der Ladungen darstellen sowie m und n jeweils eine Zahl von 1 bis 4 bedeuten, und
b) 90 bis 10 Gew.% eines wasserfreien organischen Lösungsmittels enthaltend mindestens eine -OH, -OR₁, -COOH, -COOR₁, -COR₁ oder -CON(R₁)₂ Gruppe,
worin R₁ Wasserstoff, einen unsubstituierten oder substituierten C₁-C₆-Alkylrest oder Arylrest bedeutet, enthalten,
als Beschleunigersysteme für die Härtung von Epoxidharz/Amin-Kombinationen.

2. Verwendung von Lösungen gemäss Anspruch 1, **dadurch gekennzeichnet, dass** das Beschleunigersystem 25 bis 75 Gew.% des Salzes der Formel II mit dem Komplexbildner, und 25 bis 75 Gew.% eines Lösungsmittels b) gemäss Anspruch 1 enthält.

3. Verwendung von Lösungen gemäss Anspruch 1, **dadurch gekennzeichnet, dass** in der Formel II Me₁ Li, Na, K, Mg, Ca, Ba, Fe, Co, Ni, Cu, Zn, Sn, Al, La, Ce oder N(R₁)₄, S(R₁)₃ und P(R₁)₄ ist, wobei R₁ die im Anspruch 1 angegebene Bedeutung hat, und A Cl, Br, J, NO₃, NO₂, ClO₃, ClO₄, SbF₆, AsF₆, PF₆, BF₄, CN, SCN, R₃-COO, R₃-SO₃, R₃-SO₂, PO₄, HPO₄ oder H₂PO₄ bedeutet, worin R₃ unsubstituiertes oder substituiertes C₁-C₆-Alkyl oder Aryl darstellt, und der organische Komplexbildner entweder der Formel IV 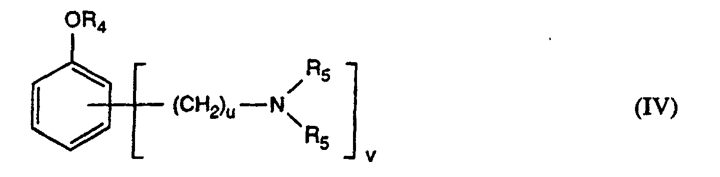 entspricht, worin R₄ Wasserstoff, C₁-C₂₀Alkyl oder Trialkyl(C₁-C₄)-Silyl, u die Zahl 0, 1, oder 2, R₅ C₁-C₆Alkyl und v die Zahl 1, 2 oder 3 sind,
oder ein Äpfelsäuredi(C₁-C₄)alkylester, ein N,N-Di(C₁-C₄)Alkylphenylalanin(C₁-C₄)-alkylester, Thioharnstoff oder unsubstituierte oder substituierte Salicylsäure oder ein Piperidinderivat ist, und das Lösungsmittel ein solches gemäss Anspruch 1 ist.

4. Verwendung von Lösungen gemäss Anspruch 3, **dadurch gekennzeichnet, dass** Me₁ Li, Ca, Fe oder La und A NO₃, Br, J, Triflat, Capronat, Perchlorat oder Propionat ist und der organische Komplexbildner 2,4,6-Tris-(dimethylaminomethyl)-phenylbutylether, 2,4,6-Tris-(dimethylaminomethyl)-phenyloctylether, 3-Dimethylaminophenol, 3-Dimethylamino-phenylbutylether, 3-Dimethylamino-phenyloctylether, Äpfelsäuredimethylester, N,N-Dimethylphenylalanin-methylester, Piperidinoethylamin, N,N-Dimethylaminoethyl-piperidin, 2,4,6-Tris-(dimethylaminomethyl)-phenol, Thioharnstoff, Salicylsäure oder 2,4,6-Tris-(dimethylaminomethyl)-phenyltrimethylsilylether ist, und das Lösungsmittel Methanol, Ethanol, Propanole, Butanole, Methylethylketon, Methylisobutylketon, Ethylenglykol oder Methoxypropylalkohol ist.

5. Verwendung von Lösungen von Beschleunigersystemen gemäss Anspruch 1, **dadurch gekennzeichnet, dass** das Beschleunigungssystem 10 bis 90 Gew.% eines stöchiometrischen 1:2 Komplexes aus einem Salz der Formel II
[Me₁]^{x⊕}ₘ[A]^{y⊖}ₙ (II),
worin die Symbole die im Anspruch 1 angegebene Bedeutung haben, mit einem organischen Komplexbildner enthaltend ein oder mehrere Heteroatome mit freien Elektronenpaaren, und
90 bis 10 Gew.% eines organischen Lösungsmittels enthaltend mindestens eine -OH, -OR₁, -COOH, -COOR₁, -COR₁ oder -CON(R₁)₂ Gruppe, worin R₁ Wasserstoff, einen unsubstituierten oder substituierten C₁-C₆-Alkylrest oder Arylrest bedeutet, enthalten.

## Claims

1. Use of a solution which comprises a binary system comprising
a) 10 to 90 % by weight of a salt of formula II
[Me₁]^{x⊕}ₘ[A]^{y⊖}ₙ (II),
which does not contain water of crystallisation,
with an organic complex former containing at least two hetero atoms having free electron pairs, which are so arranged that they are able to form with the cation Me₁ a 5-, 6- or 7-membered chelate ring,
wherein Me, is Li, Na, K, Mg, Ca, Ba, Fe, Co, Ni, Cu, Zn, Sn, Al, La or Ce or a group of the formula N(R₁)₄, S(R₁)₃ or P(R₁)₄ wherein each R₁ independently of the others is hydrogen, an unsubstituted or substituted C₁-C₆alkyl radical or aryl radical, A is any anion, and x and y are the respective number of charges and m and n are each a number from 1 to 4, and
b) 90 to 10 % by weight of an anhydrous organic solvent containing at least one -OH, -OR₁, -COOH, -COOR₁, -COR₁ or -CON(R₁)₂ group wherein R₁ is hydrogen, an unsubstituted or substituted C₁-C₆alkyl radical or aryl radical,
as an accelerator system in the hardening of epoxy resin/amine combinations.

2. Use of a solution according to claim 1, wherein the accelerator system comprises 25 to 75 % by weight of a salt of formula II with the complex former, and 25 to 75 % by weight of a solvent b) according to claim 1.

3. Use of a solution according to claim 1, wherein in formula II Me₁ is Li, Na, K, Mg, Ca, Ba, Fe, Co, Ni, Cu, Zn, Sn, Al, La, Ce or N(R₁)₄, S(R₁)₃ or P(R₁)₄, with R₁ being as defined in claim 1, and A is Cl, Br, I, NO₃, NO₂, ClO₃, ClO₄, SbF₆, AsF₆, PF₆, BF₄, CN, SCN, R₃-COO, R₃-SO₃, R₃-SO₂, PO₄, HPO₄ or H₂PO₄ wherein R₃ is unsubstituted or substituted C₁-C₆alkyl or aryl, and the organic complex former either corresponds to formula IV 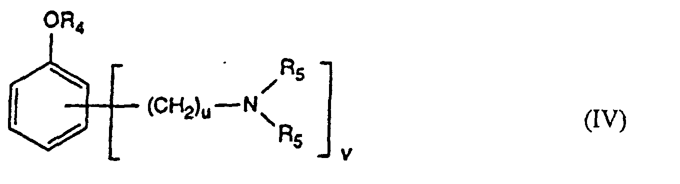 wherein R₄ is hydrogen, C₁-C₂₀alkyl or trialkyl(C₁-C₄)silyl, u is a number 0, 1 or 2, R₅ is C₁-C₆alkyl and v is a number 1, 2 or 3,
or is a malic acid di(C₁-C₄)alkyl ester, an N,N-di(C₁-C₄)alkylphenylalanine (C₁-C₄)alkyl ester, thiourea or unsubstituted or substituted salicylic acid or a piperidine derivative, and the solvent is a solvent according to claim 1.

4. Use of a solution according to claim 3, wherein Me₁ is Li, Ca, Fe or La and A is NO₃, Br, I, triflate, capronate, perchlorate or propionate and the organic complex former is 2,4,6-tris(dimethylaminomethyl)phenyl butyl ether, 2,4,6-tris(dimethylaminomethyl)phenyl octyl ether, 3-dimethylaminophenol, 3-dimethylaminophenyl butyl ether, 3-dimethylaminophenyl octyl ether, malic acid dimethyl ester, N,N-dimethylphenylalanine methyl ester, piperidinoethylamine, N,N-dimethylaminoethylpiperidine, 2,4,6-tris(dimethylaminomethyl)phenol, thiourea, salicylic acid or 2,4,6-tris(dimethylaminomethyl)phenyl trimethylsilyl ether, and the solvent is methanol, ethanol, a propanol, a butanol, methyl ethyl ketone, methyl isobutyl ketone, ethylene glycol or methoxypropyl alcohol.

5. Use of a solution of an accelerator system according to claim 1, wherein the accelerator system comprises 10 to 90 % by weight of a stoichiometric 1:2 complex comprising a salt of formula II
[Me₁]^{x⊕}ₘ[A]^{y⊖}ₙ (II),
wherein the symbols are as defined in claim 1, with an organic complex former containing one or more hetero atoms having free electron pairs, and
90 to 10 % by weight of an organic solvent containing at least one -OH, -OR₁, -COOH, -COOR₁, -COR₁ or -CON(R₁)₂ group wherein R₁ is hydrogen, an unsubstituted or substituted C₁-C₆alkyl radical or aryl radical.

## Revendications

1. Utilisation de solutions contenant un système binaire
a) de 10 à 90 % en poids d'un sel de formule (II)
**[Me**_{**1**}**]**^{**x⊕**}_{**m**}**[A]**^{**y⊖**}_{**n**} **(II),**
qui ne contient pas d'eau de cristallisation,
avec un agent complexant organique contenant au moins deux hétéroatomes avec des pairs d'électrons libres, qui sont disposés de façon telle qu'ils puissent former avec le cation Me₁ un cycle chélate de 5, 6 ou 7 chaînons,
où Me₁ représente Li, Na, K, Mg, Ca, Ba, Fe, Co, Ni, Cu, Zn, Sn, Al, La ou Ce ou un groupe de formule N(R₁)₄, S (R₁)₃ ou P(R₁)₄, où R₁ représentent indépendamment un atome d'hydrogène, un reste aryle ou alkyle en C₁-C₆ non substitué ou substitué, A représente un anion quelconque, x et y représentent le nombre respectif des charges, ainsi que m et n sont chacun un nombre de 1 à 4, et
b) de 90 à 10 % en poids d'un solvant organique anhydre contenant au moins un groupe -OH, -OR₁, -COOH, -COOR₁, -COR₁ ou -CON(R₁)₂, où R₁ représente un atome d'hydrogène, un reste aryle ou alkyle en C₁-C₆ non substitué ou substitué,
en tant que systèmes accélérateurs pour le durcissement de combinaisons de résine époxyde/amine.

2. Utilisation de solutions selon la revendication 1, **caractérisée en ce que** le système accélérateur présente une teneur de 25 à 75 % en poids en sel de formule II avec l'agent complexant et de 25 à 75 % en poids en un solvant b) selon la revendication 1.

3. Utilisation de solutions selon la revendication 1, **caractérisée en ce que** dans la formule II, Me₁ représente Li, Na, K, Mg, Ca, Ba, Fe, Co, Ni, Cu, Zn, Sn, Al, La, Ce ou N(R₁)₄, S(R₁)₃ ou P(R₁)₄, où R₁ possède la signification donnée à la revendication 1, et A représente Cl, Br, J, NO₃, NO₂, ClO₃, ClO₄, SbF₆, AsF₆, PF₆, BF₄, CN, SCN, R₃-COO, R₃-SO₃, R₃-SO₂, PO₄, HPO₄ et H₂PO₄, où R₃ représente un groupe aryle ou alkyle en C₁-C₆ non substitué ou substitué et l'agent complexant organique répond soit à la formule IV 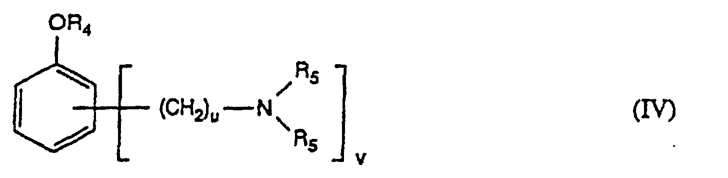 où R₄ représente un atome d'hydrogène, un groupe alkyle en C₁-C₂₀ ou tri(alkyl en C₁-C₄)silyle, u vaut 0, 1 ou 2, R₅ représente un groupe alkyle en C₁-C₆ et v vaut 1, 2 ou 3,
soit un malate de dialkyle en C₁-C₄, un ester d'alkyle en C₁-C₄ de N,N-di (alkyl en C₁-C₄)phénylalanine, la thiourée ou l'acide salicylique non substitué ou substitué ou un dérivé de la pipéridine, et le solvant est un solvant selon la revendication 1.

4. Utilisation de solutions selon la revendication 3, **caractérisée en ce que** Me₁ représente Li, Ca, Fe ou La, et A représente des groupes NO₃, Br, J, triflate, capronate, perchlorate ou propionate, et l'agent complexant organique est l'éther 2,4,6-tris-(diméthylaminométhyl)-phénylbutylique, l'éther 2,4,6-tris-(diméthylaminométhyl)-phényloctylique, le 3-diméthylaminophénol, l'éther 3-diméthylaminophénylbutylique, l'éther 3-diméthylaminophényloctylique, le malate de diméthyle, l'ester méthylique de la N,N-diméthylphénylalanine, la pipéridinoéthylamine, la N,N-diméthylaminoéthylpipéridine, le 2,4,6-tris-(diméthylaminométhyl)-phénol, la thiourée, l'acide salicylique ou l'éther 2,4,6-tris-(diméthylaminométhyl)-phényltriméthylsilylique, et le solvant le méthanol, l'éthanol, les propanols, les butanols, la méthyléthylcétone, la méthylisobutylcétone, l'éthylène-glycol ou l'alcool méthoxypropylique.

5. Utilisation de solutions de systèmes accélérateurs selon la revendication 1, **caractérisée en ce que** le système accélérateur présente une teneur de 10 à 90 % en poids en un complexe stoechiométrique d'un complexe 1:2 d'un sel de formule II
**[Me**_{**1**}**]**^{**x⊕**}_{**m**}**[A]**^{**y⊖**}_{**n**} **(II),**
où les symboles possèdent la signification donnée à la revendication 1, avec un agent complexant organique contenant un ou plusieurs hétéroatomes avec des paires d'électrons libres, et
de 90 à 10 % en poids d'un solvant organique contenant au moins un groupe -OH, -OR₁, -COOH, COOR₁, -COR₁ ou -CON(R₁)₂, où R₁ représente un atome d'hydrogène, un reste aryle ou alkyle en C₁-C₆ non substitué ou substitué.
